# EUROPEAN PATENT SPECIFICATION

(11) **EP 3 057 265 B1**
(45) Date of publication and mention of the grant of the patent: **27.06.2018**
(21) Application number: 15305195.8
(22) Date of filing: 11.02.2015
(51) Int. Cl.: H04L 12/741, H04L 12/24, H04L 12/931

(54) **An interface between a network entity and a virtual network function within a software-defined Network**
Schnittstelle zwischen einer Netzwerkeinheit und einer virtuellen Netzwerkfunktion in einem Software-definierten Netzwerk
Interface entre une entité de réseau et une fonction de réseau virtuel dans un réseau défini par logiciel

(43) Date of publication of application: 17.08.2016
(73) Proprietor: Alcatel Lucent, 91620 Nozay (FR)
(72) Inventor: Bui, Dinh Thai, 91620 Nozay (FR)
(74) Representative: Berthier, Karine

(56) References cited:
- US-A1- 2013 176 850
- US-A1- 2014 229 945
- US-B1- 8 276 140
- SEVIL MEHRAGHDAM ET AL: "Specifying and placing chains of virtual network functions", 2014 IEEE 3RD INTERNATIONAL CONFERENCE ON CLOUD NETWORKING (CLOUDNET), 8 October 2014 (2014-10-08), pages 7-13, XP055213286, DOI: 10.1109/CloudNet.2014.6968961 ISBN: 978-1-47-992730-2
- ZHOU H SONG HUAWEI Q FU CHINA MOBILE H: "Virtual Network Function Configuration Architecture; draft-zhou-opsawg-vnf-config-arch-01.txt", VIRTUAL NETWORK FUNCTION CONFIGURATION ARCHITECTURE; DRAFT-ZHOU-OPSAWG-VNF-CONFIG-ARCH-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 July 2014 (2014-07-04), pages 1-9, XP015100496, [retrieved on 2014-07-04]

## Description

### BACKGROUND OF THE INVENTION

### Field of the invention

The present invention relates to the telecommunication software controlled networks called software-defined network (SDN), more peculiarly it relates to a method for interfacing a network entity (NE), e. g. a switch, and a virtual network function (VNF) in a software-defined network (SDN).

A SDN comprises a centralized controller, if it is a small sized network; or comprises several controllers respectively controlling connected network domains if it is a large network. Within the SDN paradigm, software-based NE are implemented and deployed at the network edge to replace hardware-based NE as the formers can be deployed faster than the later. However, the formers are by now simpler than the later as they contain much fewer features.

With the introduction of the VNF concept and framework by standard organizations, in parallel with the evolution of data center environment, more and more features are integrated into the software-based NEs so that they can approach their hardware-based peers. The following is an example list of those features also called as VNFs:
- Deep Packet Inspection (DPI)
- Application-Level Gateway (ALG)
- Firewalling

Within the above context, there is a need to modify the NE code and to recompile it each time a new VNF is added. Although this situation is not very different from the one the network operator encounters with the hardware-based NEs (e. g. upgrade outage schedule), it is an important impediment to the deployment flexibility of software-based NEs with regards to the flexibility already offered by the software environment where they are deployed; e. g. Linux kernel modules can be inserted or removed from the Linux kernel while the later is up and running (i.e. during operation).

### Description of the prior art

The best known solution consists in implementing the VNFs within the network controller. The drawback of this solution is that the network controller finds itself on the data path, whereas the SDN paradigm is to separate the control plane from the data plane. In this case, the network controller design is bound to data path constraints such as performance criteria (e.g. use of C language instead of Java language, or any object oriented languages for performance). In terms of architecture, this imposes the network controller to be located next to the NE as per the induced latency of the control channel on the data path. In conclusion, we lose all the flexibility targeted initially by the SDN concept.

The document US 2014/229945 describes a method for operating an electronic network, the network having a hardware layer comprising hardware components and requiring network functions, the method comprising:
- virtualizing networking functions to virtual machines;
- using an addressing overlay above a hardware layer of said network, said addressing overlay providing identities of said virtual machines, and mapping of said identities to hardware locations at which a respective virtual machine currently resides;
- moving respective ones of said virtual machines around different hardware components of said network, mapping of said identities being updated with said moving of said virtual machines;
- directing data flows around said network via said virtual machines using software defined flow switching, said flows being directed among said moving virtual machines using said identities.

Thanks to this known method, a NE can acquire information about a VNF and call it without the need for this VNF to be a built-in feature of the NE. i.e. the VNF code is implemented outside of the NE and is completely independent of the NE code source. However this method is limited to following and mapping the VNF identifier to its location/position within a network in a dynamic manner. This mapping enables to derive appropriate traffic forwarding rules in order to forward data to the right VNF.

The aim of the present invention is to provide a method so that is the use of a VNF is not limited to receive forwarded traffic7-29. The aim is to specify a true interface between a traffic forwarding network element (A switch) and a VNF. This traffic forwarding element will not forward traffic to a VNF but will call a VNF through this interface, for any kind of use.

The document US 8 276 140 describes a method enabling users to specify a configuration for one or more virtual machine instances including one or more parameters for the virtual machines. This known method comprises the steps of:
- receiving a plurality of user-specified parameter values including values for storage size and input/output performance parameters for a virtual disk instance;
- generating one or more virtual disk instances having the user-specified parameter values;
- monitoring usage of the one or more virtual disk instances;
- determining that the monitored usage of the one or more virtual disk instances satisfies a threshold;
- in response to determining that the monitored usage of the one or more virtual disk instances satisfies the threshold, determining two or more modified parameter values that result in a lower price than a price determined based on the corresponding two or more user-specified parameter values; and
- updating the corresponding two or more user-specified parameter values with the two or more modified parameter values.

Thanks to this known method a VNF can receive parameters from a human user only. The aim of the present invention is to provide a method that enables customizing a VNF according to the requests of a network entity without the intervention of a human user.

### SUMMARY OF THE INVENTION

A first object of the invention is a network entity comprising means for acquiring information about a virtual network function and means for calling it; characterized in that said means for calling it comprise:
- a function table for storing multiple function entries, each function entry having a number referring to a different virtual network function, so that said virtual network function can be called by means of said function entry, and each function entry containing at least the following information:
   - a first pointer that enables the network entity to pass input parameters to a currently called virtual network function;
   - a second pointer that enables the network entity to retrieve output parameters from a currently called virtual network function, said output parameters resulting of the processing of a current data packet;
   - a third pointer that enables the network entity to pass the current data packet content and related information to the currently called virtual network function:
- three internal metadata placeholders for respectively storing at least the following information:
   - first information that enables the network entity to pass, to the currently called virtual network function, input parameter values of said current virtual network function, such that this latter can modify said current data packet content according to said input parameters;
   - second information that enables the network entity to retrieve output parameters from the currently called virtual network function:
   - third information that comprise characteristics of the current data packet;
- means for receiving said three pointers from a software defined network controller.

A second object of the invention is a virtual network function comprising means for being called by a network entity, in a software defined network, characterized in that said means for being called by a network entity comprise means for receiving from a network entity when said virtual network function is called by said network entity, and for storing in said virtual network function:
- first information that enables said virtual network function to acquire input parameters it requires, and such that this virtual network function can modify the content of a current data packet according to said input parameters;
- second information that enables said virtual network function to pass its execution results to said network entity;
- third information that enables said virtual network function to access to a data packet to be processed and to its related characteristics.

A third object of the invention is a method for interfacing a network entity and a virtual network function within a software-defined network comprising at least one software defined network controller, said virtual network function comprising means for being called by a network entity; comprising at least one software defined network controller, said method being characterized in that it comprises the steps of informing said network entity of the existence of a virtual network function, and how to access to its interface, by transmitting via a control protocol, from said controller to said network entity, an order to add/modify/remove a function entry to/from a function table within the network entity.

These characteristics define a generic interface such that the NE receives, from the controller, three pointers which provide location to four different pointers of the VNF. The latter pointers respectively point to buffers/memories managed by the NE. Thus the VNF can access different input/output parameters and the packet content, so it can modify the packet content according to input parameters provided to it by the NE. The VNF can finally handle the results of the processing of the packet back to the NE with related output parameter values.
This interface enables the NE to acquire information about a VNF and to call it without the need for this VNF to be a built-in feature of the NE, i.e. the VNF code is implemented outside of the NE and is completely independent of the NE code source. So there is no need to modify the NE code and to recompile it each time a new VNF is added or an existing VNF is modified.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be made with reference to the accompanying drawings. If possible, like or similar reference numerals designate the same or similar components throughout the figures thereof and description, in which:
- **vnfPacketParams** stores information that enables the VNF1m to access to the current packet to be processed, and its related characteristics; this information is a table containing the following values:
   -- p_packetBuffer (64 bits);
   -- p_metaPacketParams (64 bits);
- **vnfInputParams** stores information which enables the VNFm1 to acquire input parameters it requires; in this first embodiment, it is a pointer P6 (described below);
- **vnfOutputParams** stores information which enables the VNF1m to pass its execution results to the NE1; in this first embodiment, it is a pointer **P7** (described below).

For defining an interface I1 between the network entity NE1 and the virtual network function VNF1m, the network entity NE1 comprises:
- A classical data packet buffer PB1.
- A channel (not represented) that connects the network entity NE1 to an external SDN controller (not represented). The controller manages the network entity NE1 via this channel.
- A function table FT1 that contains multiple function entries FE1, ..., FEm,..., FEn, respectively referring to n different virtual network functions VNF11, ..., VNF1m,..., VNF1n. We will consider the exemplary virtual network function VNF1m that is currently called by the NE1. Each function entry FE1, ..., FEm,..., FEn, of the function table FT1 comprises a plurality of fields. For instance, let us consider the respective contents of the fields of the function entry FEm corresponding to the VNF1m. They are:
   - **vnfNumber = m** : this field gives the index m of the function entry VNF1m, in the function table FT1. It is used when the VNF1m is called by the NE1.
   - **vnfLocation(m):** this field provides the network entity NE1 with a means for locating the execution code of the VNF1m and to call for it.
   - **p_vnfPacketParams(m):** this field provides information that enables the network entity NE1 to pass the packet data and its related information to the VNF1m. In this embodiment, this is a pointer **P1** pointing to the placeholder **vnfPacketParams** in VNF1m.
   - **p_vnfInputParams(m):** this field provides information that enables the network entity NE1 to pass input parameters to the VNF1m. In this embodiment, this is a pointer **P2** pointing to the placeholder **vnflnputParams,** in the VNF1m.
   - **p_vnfOutputParams(m):** this field provides information that enables the VNF1m to retrieve outputs of this VNF1m. This is a pointer **P3** pointing to the placeholder **vnfOutputParms** in the VNF1m.
- Three placeholders are implemented that enable the network entity NE1 to track states and metadata associated to the current data packet:
   - **metaInputParams:** In this first embodiment, it stores a table that contains the input parameter values of the virtual network function VNF1m being called by said network entity NE1, or of the last called virtual network function (while VNF1m has not been called yet by NE1); theses input parameters are:
      -- input parameter number (64 bits),
      -- input parameter 1 (64 bits),
      -- input parameter 2 (64 bits).
   - **metaOutputParams:** In this first embodiment, it stores a table that contains the output parameter values of the virtual network function VNF1m being called by said network entity NE1 or of the last called virtual network function; theses input parameters are:
      -- output parameter number (64 bits),
      -- output parameter 1 (64 bits),
      -- output parameter 2 (64 bits)
      -- etc.
   - **metaPacketParams:** In this first embodiment, it stores a table that contains the present characteristics of the current data packet; theses packet parameters are:
      -- packet length (64 bits),
      -- packet header length (64 bits),
      -- packet payload length (64 bits),
      -- etc.
- A protocol that enables the network controller (not represented) to add/remove a function entry into/from the function table FT1. This could be a new proprietary protocol or an extension to an existing protocol, such as OpenFlow, Netconf, etc.

This interface I1 is used in the following way:
The current virtual network function, i. e. being called by the network entity NE1, is the virtual network function VNF1m. Thanks to the m^{th} function entry FEm, the network entity NE1 can get access to the placeholders within the virtual network function VNF1m, namely:
- The field **p_vnfPacketParams(m)** contains a pointer P1 pointing to the placeholder **vnfPacketParams** in the VNF1m.
- The field **p_vnfInputParams(m)** contains a pointer P2 pointing to the placeholder **vnfInputParams** in the VNF1m.
- The field **p_vnfOutputParams(m)** contains a pointer P3 pointing to the placeholder **vnfOutputParams** in the VNF1m.

### Consequently:

Thanks to the pointer **P1,** the NE1 is able to communicate the following parameters to the VNF1m:
- The location of a current packet in its packet buffer PB1, by writing an appropriate memory address information p_packetBuffer (64 bits) into the first line of the table in the placeholder **vnfPacketParams,** in the VNF1m. This address information will constitute a pointer **P4** pointing to the current packet in the **packet buffer PB1** in the NE1.
- The location of a table stored in the placeholder **metaPacketParams** in the NE1, by writing the appropriate address information p_metaPacketParams (64 bits) into the second line of the table in the placeholder **vnfPacketParams,** in VNF1m. This address information constitutes a pointer **P5** pointing to the table stored in the placeholder **metaPacketParams,** in the NE1.

Thanks to the pointer **P2,** the NE1 is able to communicate, to the VNF1m, information which enables the VNF1m to acquire input parameters it requires. The pointer P2 points to the location of the pointer **P6** to be stored in the placeholder **vnfInputParams,** in the VNF1m. The NE1 writes, in this location, an appropriate memory address information that constitutes the pointer **P6** pointing to the table stored in the placeholder **metaInputParams** in the NE1.

Thanks to the pointer **P3,** the NE1 enables the VNF1m to communicate outputs of this VNF1m. The pointer **P3** points to the location of the pointer **P7** to be stored in the placeholder **vnfOutputParams,** in the VNF1m. The NE1 writes, in this location, an appropriate memory address information that constitutes the pointer **P7** pointing to the table stored in the placeholder **metaOutputParams** in the NE1.

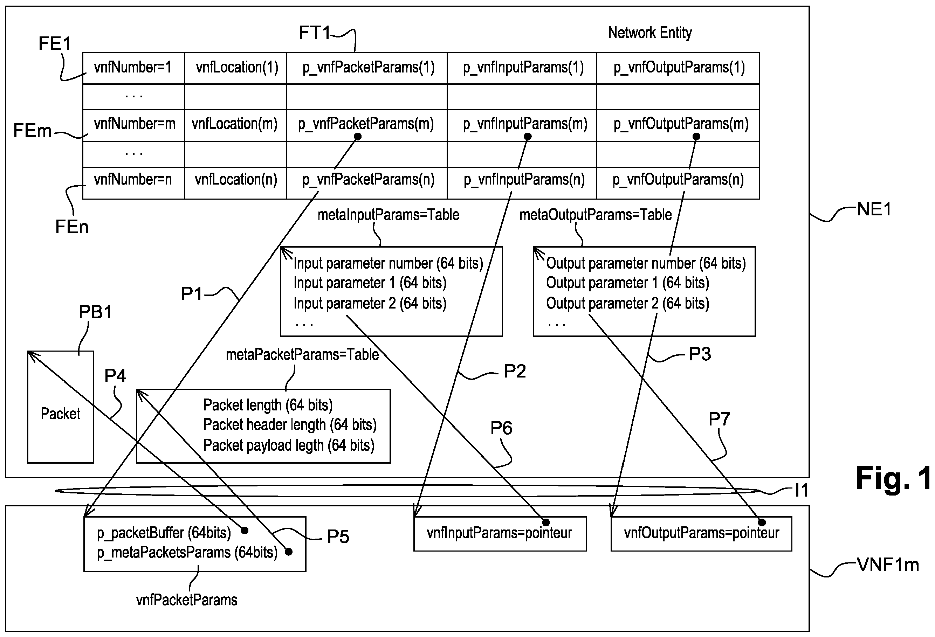

In this first embodiment, the input/output parameters of the VNF1m are stored within the network element NE1 (i.e. respectively in the place holders **metaInputParams** and **metaOutputParams**). This embodiment enables the VNF1m to be called by another NE (after being called by the current network entity NE1) without conflict (i.e. without erasing the current input and output parameters).
In order to provision the aforementioned function table FT1, the network controller uses a proprietary protocol or an extension of existing ones. The network entity NE1 is controlled by a SDN controller (not represented) via a protocol:
- According to a first variant of the first embodiment represented by the Figure 1, this protocol is an extension of the protocol OpenFlow.
- According to a second variant, this protocol is NetConf.

### I.1 First variant of the first embodiment:

### OpenFlow framework extension

The extension described below is made with respect to the document "Open Networking Foundation (ONF) - OpenFlow Switch Specification - version 1.4.0 - October 2013)": OpenFlow is a communications protocol that gives access to the forwarding plane of a network switch or router. It enables remote SDN controllers to determine the path of network packets through a network of OpenFlow switches. This separation of the control from the forwarding enables more sophisticated traffic management than is feasible using access control lists and routing protocols.

OpenFlow enables remote administration of an OpenFlow switch's packet forwarding tables, by adding, modifying and removing packet matching rules and actions. This way, routing decisions can be made periodically, or ad hoc, by a controller and translated into rules and actions with a configurable lifespan. These rules and actions are then deployed into a switch's flow table, leaving the actual forwarding of matched packets to the switch, at wire speed, for the duration of those rules.

Packets which are unmatched by the switch can be forwarded to the controller. The controller can then decide to modify existing flow table rules on one or more switches, or to deploy new rules, in order to prevent a structural flow of traffic between switch and controller. It could even decide to forward the traffic itself, provided that it has ordered the switch to forward entire packets instead of just their headers.

An OpenFlow switch generally comprises a pipelining process using multiple flow tables, each flow table containing multiple flow entries. The OpenFlow pipelining process defines how packets interact with those tables.

The extension of the Open Flow framework consists in the followings:

### 1) New Open Flow structures:

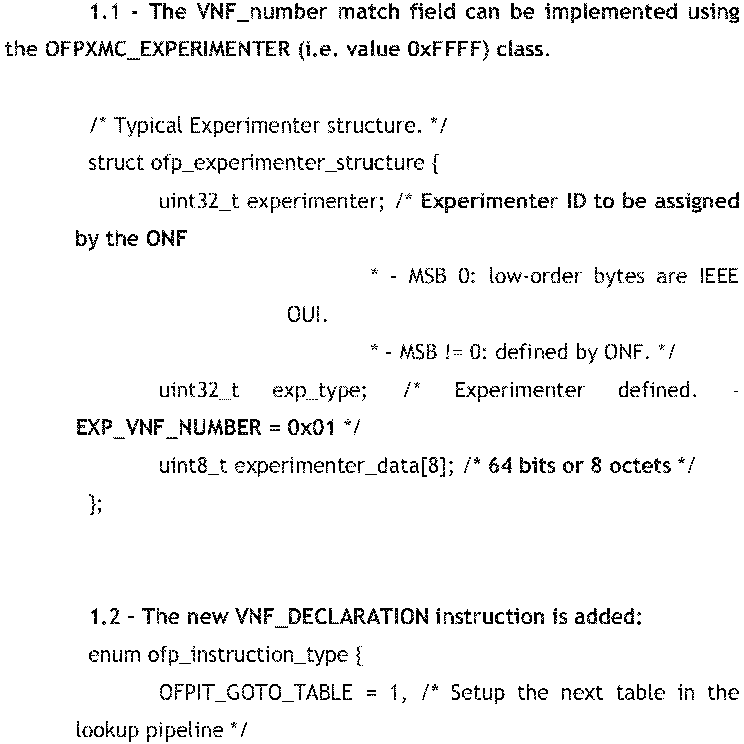

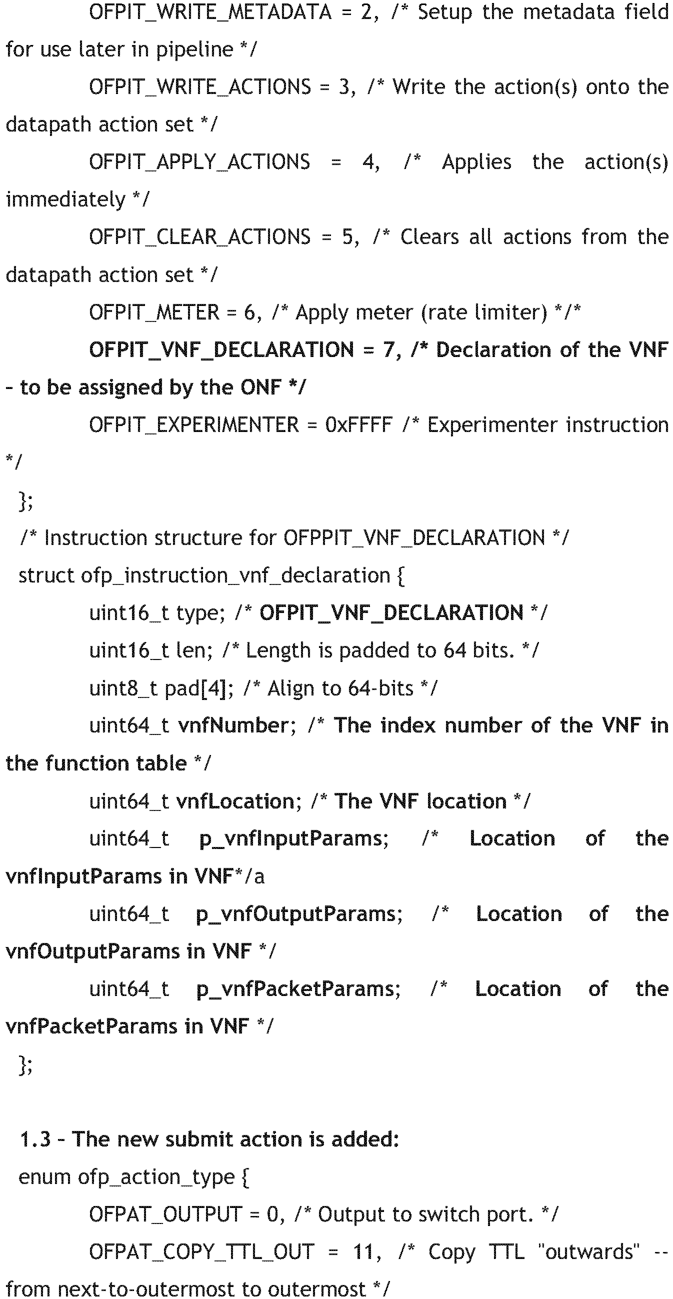

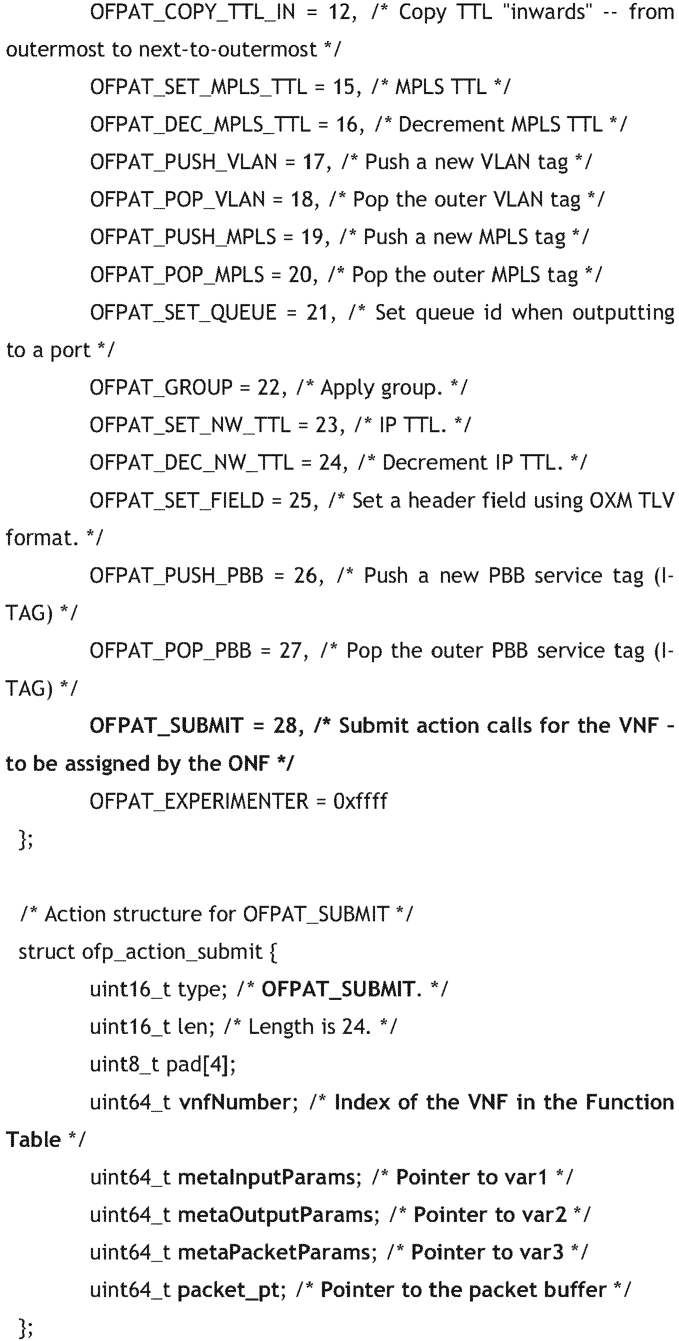

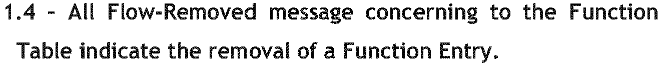

### 2) A new function table

A new function table FT1 is added into the OpenFlow switch OFS1, which plays the role of the NE1. This table contains virtual network function entries which are ordered, i.e. each entry has a number, called **VNF_number,** associated to it. Entries are classified in the increasing order. Each function entry corresponds to the declaration of one VNF with the corresponding VNF interface or application programming interface (API) so that the VNF can be called by the OpenFlow switch OFS1. The packet is then submitted by the OFS1 to the called VNF.

A function entry has the same format as a flow entry with:
- match fields reduced to an EXPERIMENTER field called VNF_number;
- and an instruction set reduced to the declaration of the VNF Interface (i.e. part of the interface I1 implemented by VNF).

### Main components of a function entry in the function table:

| | | | | | |
|---|---|---|---|---|---|
| Match fields = **VNF_number** | Priority | Counter | Instructions = **VNF_Declaration** | Timeout | Cookie |

Each function entry mainly contains:
- **VNF_number:** a number (within an OpenFlow switch) associated with the VNF.
- **Priority:** precedence between function entries with the same VNF number.
- **Counter:** updated when the VNF is called.
- **VNF_Declaration:** declaration of the interface by which the network entity NE1 can call for the VNF.
- **Timeout:** maximum amount of time or idle time (i.e. time from the last call) before the function entry is expired by the network entity NE1. If the value is 0, there is no expiry mechanism (i.e. expiry mechanism is disabled).
- **Cookie:** opaque data value chosen by the controller. May be used by the controller to filter statistics.

### 3) A new action:

A new action **submit(metaInputParams, metaOutputParams, metaPacketParams, vnfNumber)** is added into the OpenFlow set of actions. This action enables the network entity NE1 to call for the VNF (associated with the VNF_number) during the pipeline process.

### 4) New metadata placeholders:

metalnputParams, metaOutputParams, and metaPacketParams are added and associated with each incoming packet similarly to the present OpenFlow *metadata* field. They are essentially used as placeholders for storing the inputs and ouputs of a VNF call. Matches can be performed against those fields in a Flow Entry in the same way they are presently performed against the *metadata* field.

### 5) An optional message Flow-Removed:

Optionaly, a message Flow-Removed is sent to the Controller when a Function Entry is expired by the network entity NE1. The Flow-Removed message informs the Controller about the removal of a Function Entry when the Function Entry timeout is exceeded and the Function Entry has been removed.

With the Controller angle, it is noted that a VNF could be implemented as the support for a network operator policy. The expiry and thus the removal of a Function Entry imply the expiry of the associated operator policy.

For the sake of clarity, the above described exemplary embodiment NE1 of the network entity only comprises two tables: one for the meta input parameters and one for the meta output parameters. However other embodiments may comprise supplementary tables, inside the network entity, without departing from the principle of the invention.

### 6) A new OpenFlow switch pipelining process:

The OpenFlow pipeline of a classical OpenFlow switch generally contains multiple flow tables. Each flow table in the switch contains a set of flow entries; each flow entry consists of match fields, counters, and a set of instructions to apply to matching packets. Matching starts at the first flow table and may continue to additional flow tables. Flow entries match packets in priority order, with the first matching entry in each table being used. If a matching entry is found, the instructions associated with the specific flow entry are executed. If no match is found in a flow table, the outcome depends on the switch configuration: The packet may be forwarded to the controller over the OpenFlow channel, dropped, or may continue to the next flow table. Instructions associated with each flow entry describe packet forwarding, packet modification, group table processing, and pipeline processing. Pipeline processing instructions enable packets to be sent to subsequent tables for further processing and enable information, in the form of metadata.

Table pipeline processing stops when the instruction set associated with a matching flow entry does not specify a next table; at this point the packet is usually modified and forwarded. Flow entries may forward the packet to a port. This is usually a physical port, but it may also be a virtual port defined by the switch or a reserved virtual port defined by this specification. Reserved virtual ports may specify generic forwarding actions such as sending to the controller, flooding, or forwarding using non-OpenFlow methods, such as "normal" switch processing, while switch-defined virtual ports may specify link aggregation groups, tunnels or loopback interfaces.

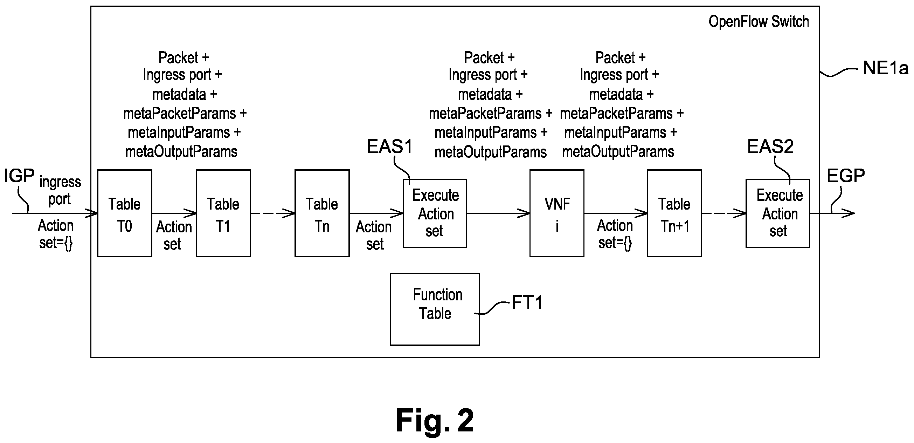

**Figure 2** illustrates a first example of pipelining process in a variant NE1a of the above described embodiment NE1 of the network entity according to the invention. This network entity is an OpenFlow switch.
The interface I1 extends the OpenFlow framework in order to include the virtual network function VNF1m into the OpenFlow pipeling process of data packets in the network entity NE1. Through this interface 11, the network entity NE1 receives, from the controller, three pointers P1, P2 and P3 which provide location to four different pointers P4, P5, P6, and P7 of the virtual network function VNF1m. The latter pointers respectively point to buffers/memories managed by the network entity NE1. Thus the virtual network function VNF1m can access different input/output parameters and the packet content, so it can modify the packet content according to input parameters provided to it by the network entity NE1. The virtual network function VNF1m can finally handle the results of the processing of the packet back to the network entity NE1 with related output parameter values i.e. the table metaOutputParams.

For the pipeling process, the OpenFlow switch NE1a uses:
- a function table FT1;
- an ingress port IGP;
- an egress port EGP;
- a series of flow tables T0 , T1, ..., Tn, Tn+1 respectively associated to processing units (not represented on Figure 2) for running an OpenFlow pipelining process;
- a first action execution logic called "execute action set" EAS1;
- a second action execution logic called "execute action set" EAS2.

Metadata associated to the current packet, may contain the following information:
- a packet address
- an ingress port
- metadata
- metaPacketParams
- metaInputParams
- metaOutputparams

We consider data packets that are processed from the ingress port IPT to the egress port EPT. The whole OpenFlow pipelining process comprises the sequence of flow tables T0, T1, ..., Tn, Tn+1. The flow tables can be programmed by a SDN controller (not represented on Figure 2.) via the protocol OpenFlow. When an incoming packet arrives at the ingress port IPT, the header information and/or incoming port of the packet is first compared with the entries of the flow table T0. As a result of matching the packet in the first flow table T0, the packet can be updated, sent out through the egress port EPT or sent to the processing unit associated to any subsequent flow table T1, ..., Tn, thereby bypassing the processing by intermediate tables.

Each flow table T0, T1, Tn, Tn+1 includes a set of entries, where each entry describes a packet handling alternative with three set of fields: match fields, counters, and actions:
- A match field contains rules that specify the circumstances under which the actions are to be executed. For example, a rule can specify that if a packet header field (e.g., Ethernet header fields, MPLS header fields, IP header fields, etc.) matches a given value, a corresponding action should be taken.
- An action field contains the actions to be executed, after the end of the processing in one or more of the other flow tables T1, ..., Tn.

During the processing in the sequence of tables T1, ..., Tn, all the scheduled actions are grouped into a first action set. The actions of this first set are executed, by the "execute action set" EAS1 after the processing in the table Tn. In each instance where the actions are applied, a corresponding counter is updated.

According to the invention, the virtual network function VNFi is executed between the processing in the flow table Tn and the processing in at least one additional flow table Tn+1 within the flow pipelining process. To do this, the flow table Tn contains a flow entry whose action set includes the following commands:
**actions=submit(metaPacketParams, metalnputParams, metaOutputParams, I (for** VNF number i**), goto_table(n+1)**

The function table FT1 stores flow entries, as mentioned in paragraph 1 above. It is configured beforehand with a function entry having the following parameters, for i=1 to n, if there are n virtual network functions:

| | | | | | |
|---|---|---|---|---|---|
| VNF_number = i | Priority = x | Counter | Instruction = **VNF_Declaration** | Timeout = 0 | Cookie |

In a preferred embodiment, the first action set is executed before the packet is submitted to the given virtual network function VNFi (especially when the VNFi is not an internal method of the OpenFlow switch). Once the given virtual network function VNFi has worked on the packet, it handles the modified packet back to the OpenFlow switch pipelining process. This later then continues the process with one, or more, next flow table (e.g. Table Tn+1).

After the execution of the virtual network function VNFi additional actions are grouped into a second set of actions. Finally the actions of the second set are executed, by the second "execute action set" EAS2 just before the egress port EGP.
Alternatively, the first and the second action sets can be grouped for constituting a single action set that is executed just before serializing the packet out of the OpenFlow switch NE1a (i.e. the case where the VNFi is an internal method of the OpenFlow switch NE1a).

Note: A same VNF can be called several times within the same pipelining process.

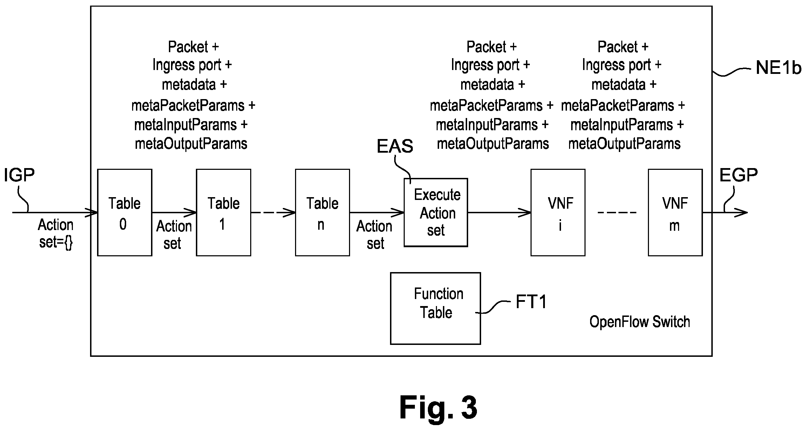

**Figure 3** illustrates a second example of pipelining process in a variant NE1b of the embodiment NE1 of the network entity according to the invention. For this pipelining process, the network entity NE1 is an OpenFlow switch and it uses:
- a function table FT1;
- an ingress port IGP;
- an egress port EGP;
- a series of flow tables T0, T1, ..., Tn, respectively associated to processing units (not represented on Figure 3) for running an OpenFlow pipelining process;
- a single action execution logic called "execute action set" EAS;
- a series of virtual network functions VNFi, ..., VNFm just before the egress port EGP, so that calls to all the VNFs are applied at the end of the pipelining process.

Metadata associated to the current packet may contain the following information:
- a packet address
- an ingress port
- metadata
- metaPacketParams
- metaInputParams
- metaOutputparams

### I.2 Second variant of the first embodiment:

### NETCONF FRAMEWORK EXTENSION

NETCONF is a protocol for the communication between a network controller and a NE, defined to install, manipulate, and delete the configuration of this NE. It provides a basic set of operations to edit and query configuration of the NE.

The second embodiment of the system according to the invention comprises an extension of the NETCONF protocol. The extensions are made with respect to the document "IETF - June 2011- RFC 4741 - Network Configuration Protocol (NETCONF)".

The packet format and the VNF pipelining process may be proprietary.

### 1) New NE-VNF interface:

**Figure 1****,** described above, can still be applied for illustrating this second variant of the first embodiment. For simplicity reason, all the parameters are of fixed size and set to 64 bits. However, they can be of variable length, such as the well-known structure Type Length Value (TLV) defined by the standard IETF RFC 3359. The type of parameters can be communicated by the NE to the network controller using the Netconf capability feature.

### 2) NETCONF messages:

Via Netconf, the network controller can provision the function table within the network entity.

The NE implements a similar Function Table than the one FT1 of the first variant of the previous embodiment.
The network controller uses the following RPC message in order to communicate to the NE the respective address of the 3 pointers which points towards different VNF's resources.

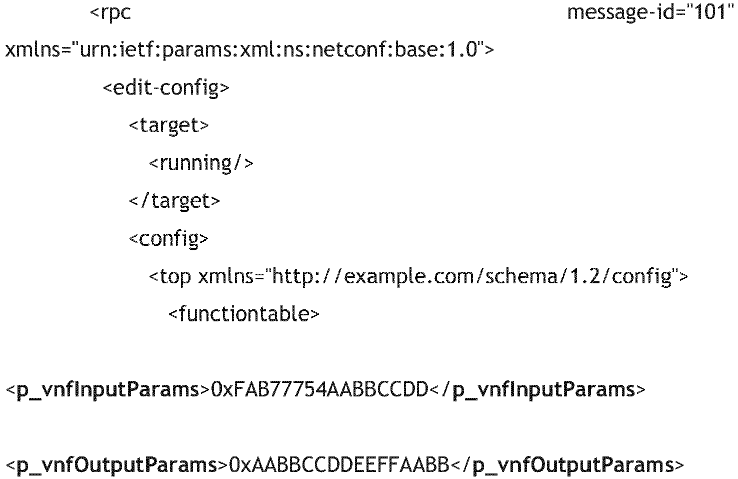

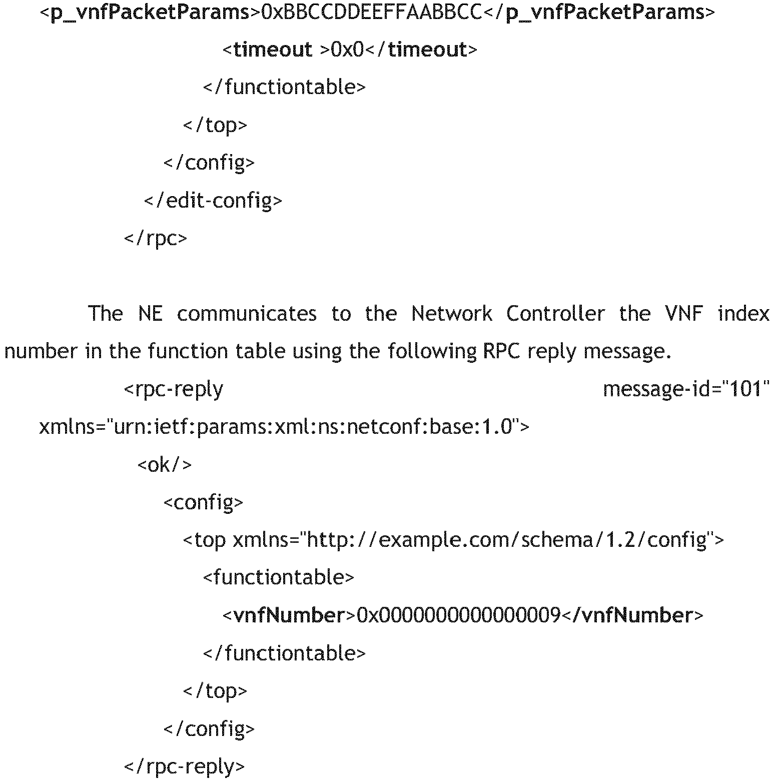

If the timeout value in the first RPC message is set to a non null value, then the Function Entry related to the VNF is removed when the timer expires. If the timeout value in the first RPC message is set to 0, then the NE should use the following RPC message to explicitly remove the Function Entry in the Function Table.

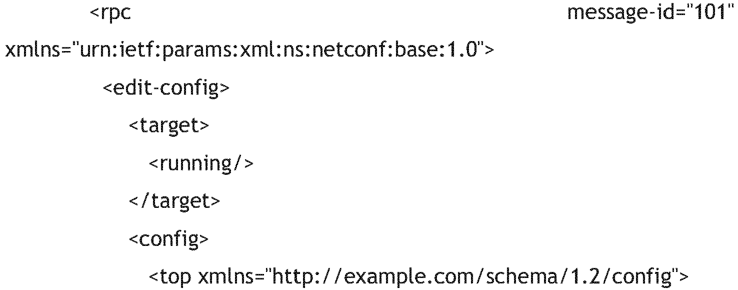

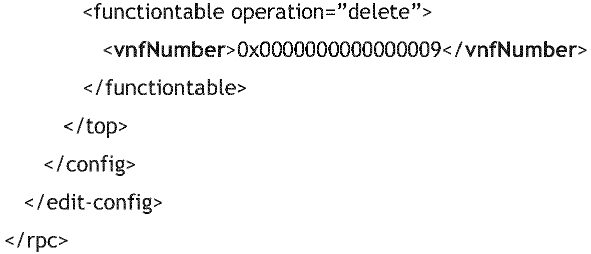

### B) SECOND EMBODIMENT:

### VNF INPUT/OUTPUT PARAMETERS STORED IN THE VNF

The sole difference of this second embodiment of the interface I2 between the second embodiment NE2 of the network element and the second embodiment VNF2m of the virtual network function, with regards to the previous ones on Figure 1, are that placeholders for storing the VNF2m input and output parameters are located within the VNF2m itself. All previous components of the interface I1 can be reapplied, as they are, to this second interface 12.
The protocols OpenFlow or NetConf and their related extensions can also be reused as they are implemented in the first embodiment. This second embodiment has the advantage of saving memory in the NE. The main disadvantage of this solution is that, if another NE calls for the VNF2m after the current NE has released it, then all current input and output parameters are overwritten (i.e. lost for the current NE).

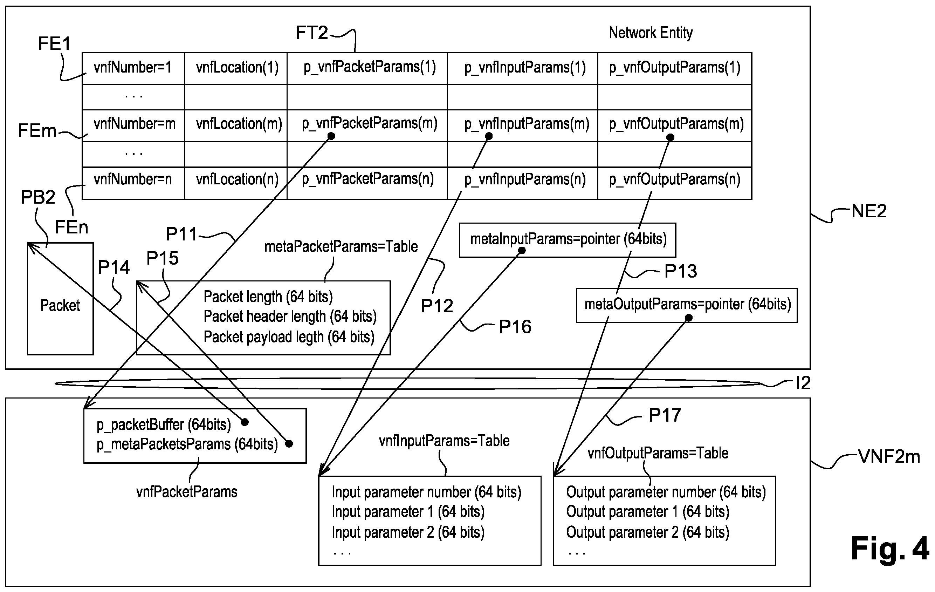

**Figure 4** illustrates this second embodiment of the new interface I2 between a network entity NE2 and an exemplary virtual network function VNF2m. For instance the network entity NE2 is an OpenFlow switch.
For defining an interface I2 between the network entity NE2 and the virtual network function VNF2m, this latter comprises three placeholders:
- **vnfPacketParams** stores information which enables the VNF2m to access to the current packet to be processed and its related characteristics; this information is a table:
   -- p_packetBuffer (64 bits) that is a pointer P14;
   -- p_metaPacketParams (64 bits) that is a pointer P15;
- **vnfInputParams** stores information which enables the VNF2m to acquire input parameters it requires; this information is a table:
   -- Input parameter number (64 bits),
   -- Input parameter 1 (64 bits),
   -- Input parameter 2 (64 bits),
   - etc.
- **vnfOutputParams** stores information which enables the VNF1m to pass its execution results to NE2; this information is a table:
   -- Output parameter number (64 bits),
   -- Output parameter 1 (64 bits),
   -- Output parameter 2 (64 bits),
   -- etc.

For defining the interface I2 between the network entity NE2 and the virtual network function VNF2m, the network entity NE2 comprises:
- A classical data packet buffer PB2.
- A channel (not represented) that connects the network entity NE2 to an external SDN controller (not represented). The SDN controller manages the network entity NE2 via the OpenFLow protocol or NetConf for instance.
- A function table FT2 that contains multiple function entries FE1, ..., FEm,..., FEn, each function entry respectively referring to a different virtual network function VNF1, ..., VNFm, ..., or VNFn. Each function entry FE1, ..., FEm,..., FEn, of the function table FT2 comprises a plurality of fields. For instance, let us consider the respective contents of the fields of the function entry FEm corresponding to the virtual network function VNF2m in this embodiment. They contain the following pieces of information:
   - **vnfNumber = m** : This field gives the index m of the currently called function entry VNF2m in the function table FT2.
   - **vnfLocation (m):** this field provides the network entity NE2 with a means for locating the execution code of the considered VNF2m and to call for it.
   - **p_vnfPacketParams (m):** This field provides information that enables the network entity NE2 to pass the packet data and related information to the VNF2m. This is a pointer **P11** pointing to the placeholder **vnfPacketParams** in the VNF2m.
   - **p_vnfInputParams (m):** This field provides information that enables the network entity NE2 to pass input parameters to the VNF2m. This is a pointer **P12** pointing to the placeholder **vnfInputParams,** in the VNF2m.

   - **p_vnfOutputParams (m):** This field provides information that enables the VNF2m to retrieve outputs of this VNF2m. This is a pointer **P13** pointing to the placeholder **vnfOutputParmater,** in the VNF2m.
- Three internal metadata placeholders which enable the network entity NE2 to track states and characteristics associated to the current data packet:
   - In this second embodiment, a placeholder **metaInputParams** stores a pointer **P16** (64 bits) pointing to the placeholder **vnfInputParams** in the VNF2m.
   - In this second embodiment, a placeholder **metaOutputParams** stores a pointer **P17** (64 bits) pointing to the placeholder **vnfOutputParams** in the VNF2m.
   - A metadata placeholder **metaPacketParams** stores the present characteristics of the current data packet:
      -- Packet length (64 bits),
      -- Packet header length (64 bits),
      -- Packet payload length (64 bits).
- A protocol that enables the network controller (not represented) to add/remove a function entry into/from the function table FT2. This could be a new proprietary protocol or an extension to an existing protocol, such as OpenFlow, Netconf, etc.

This interface I2 is used in the following way:
The current virtual network function being called by the network entity NE2 is the VNF2m. Thanks to the m^{th} function entry FEm, the network entity NE2 can get access to the placeholders within the VNF2m:
- The field **p_vnfPacketParams(m)** of the function entry FEm stores the pointer **P11** pointing to the placeholder **vnfPacketParams** in the VNF2m.
- The field **p_vnfInputParams(m)** stores the pointer **P12** pointing to the placeholder **vnfInputParams** in the VNF2m.
- The field **p_vnfOutputParams(m)** stores a pointer **P13** pointing to the placeholder **vnfOutputParams** in the VNF2m.

### Consequently :

Thanks to the pointer **P11,** the NE2 is able to communicate the following (input) parameters to the VNF2m:
- The location of a current packet in the packet buffer PB2, by writing the appropriate memory address information p_packetBuffer (64 bits) into the first line of the table stored in the placeholder **vnfPacketParams,** in the VNF2m. This address information will constitute the pointer **P14** pointing to the current packet in the packet buffer PB2 in the NE2.
- The table stored into the placeholder **metaPacketParams,** by writing the appropriate address information p_metaPacketParams (64 bits) into the second line of the table stored in the placeholder **vnfPacketParams,** in the VNF2m. This address information constitutes the pointer **P15** pointing to the table stored in the placeholder **metaPacketParams** in the NE2.

Thanks to the pointers **P12 and P16,** the NE2 is able to communicate, to the VNF2m, information which enables the VNF2m to acquire input parameters it requires. The NE2 writes input parameter values into the placeholder **vnfInputParams,** in the VNF2m, at an address designated by either the pointer P12 or the pointer P16.
It is noted that P16 content is a copy of P12 one, just before the NE2 calling for the VNF2m, , as the NE does not have access to the VNF index information again after the call (e.g. after the command submit(metaInputParams, metaOutputParams, metaPacketParams, vnfNumber), the Open Flow Switch looses the information on the VNF index). However, the NE still requires, in certain cases, to get access to input and output parameters of the last called VNF (e.g. in the next Table, there is for instance a comparison between the input and output parameter values, and different actions are realized depending on the output of this comparison).

Thus, the NE2 when working with VNF2m uses the pointer P16 instead of referring to P12. The content of P16 will be overwritten by a new value just before the NE2 is calling for another VNF (e.g. VNFi with i≠m).

Thanks to the pointer **P13 and P17,** the NE2 is able to communicate, to the VNF2m, information which enables the VNF2m to retrieve output parameters of the VNF2m. The NE2 writes output parameter values into the placeholder **vnfOutputParams,** in the virtual function VNF2m, at an address designated by either the pointer P13 or P17. It is noted that P17 content is a copy of P13 one, just before the NE2 calling for the VNF2m, as the NE does not have access to the VNF index information again after the call (e.g. after the command submit(metalnputParams, metaOutputParams, metaPacketParams, vnfNumber), the Open Flow Switch looses the information on the VNF index). However, the NE still requires, in certain cases, to get access to input and output parameters of the last called VNF (e.g. in the next table, there is for instance a comparison between the input and output parameter values, and different actions are realized depending on the output of this comparison).

Thus, the NE2 when working with VNF2m uses P17 instead of referring to P13. The content of P17 will be overwritten by a new value just before the NE2 is calling for another VNF (e.g. VNFi with i≠m). Consequently, the pointers P16 and P17 allow the NE2 to constantly have access to the last called VNF respectively input and output parameters.

In order to provision the aforementioned function table FT2, the network controller uses a proprietary protocol or an extension of existing ones: Open Flow or Netconf.

For simplicity reason, in the above described embodiments, all the parameters are of fixed size, 64 bits. However, they can be of variable length, such as the well-known structure Type Length Value (TLV) defined by the standard IETF RFC 3359. The type of parameters can be communicated by the network entity NE1 or NE2 to the network controller.

As described above, the NE and the VNF according to the invention enable for the NE to call for this VNF without the later being integrated into the NE code. The VNF can be inserted or removed from the system without interrupting the NE operationnal procedures.

Another advantage is that it prevents the network controller from implementing some data path functionalities, and prevents the network controller from being on the data path.

## Claims

1. **A network entity** (NE1; NE2) comprising means for acquiring information about a virtual network function and means for calling it; **characterized in that** said means for calling for it comprise:
- a function table (FT1; FT2) for storing multiple function entries (FE1,..., FEm,..., FEn), each function entry having a number (VNF_Number) referring to a different virtual network function (VNF1, ..., VNF1m), so that said virtual network function can be called by means of said function entry, and each function entry (FEm) containing at least the following information:
• a first pointer **(P1 in p_vnfInputParams)** that enables the network entity (NE1; NE2) to pass input parameters to a currently called virtual network function (VNF1m; VNF2m);
• a second pointer **(P2 in p_vnfOutputParams)** that enables the network entity (NE1; NE2) to retrieve output parameters from a currently called virtual network function (VNF1m; VNF2m), said output parameters resulting of the processing of a current data packet;
• a third pointer **(P3 in p_vnfPacketParams)** that enables the network entity (NE1; NE2) to pass the current data packet content and related information to the currently called virtual network function (VNF1m; VNF2m);
- three internal metadata placeholders for respectively storing at least the following information:
• first information (in **metaInputParams**) that enables the network entity (NE1; NE2) to pass, to the currently called virtual network function (VNF1 m; VNF2m), input parameter values of said current virtual network function (VNF1 m; VNF2m), such that this latter can modify said current data packet content according to said input parameters;
• second information (in **metaOutputParams**) that enables the network entity (NE1; NE2) to retrieve output parameters from the currently called virtual network function (VNF1m; VNF2m);
• third information (in **metaPacketParams**) that comprise characteristics of the current data packet;
- means for receiving said three pointers (P1, P2, P3) from a software defined network controller.

2. A network entity (NE1) according to claim 1, wherein:
• the first information (in **metaInputParams)** comprises a table that contains input parameter values of the current virtual network function (VNF1m);
• second information (in **metaOutputParams)** comprises a table that contains output parameter values of the currently called virtual network function (VNF1m).

3. A network entity (NE2) according to claim 1, wherein:
• the first information (in **metaInputParams**) is a pointer (P16) pointing to a table **(vnfInputParams**) that contains input parameter values of the currently called virtual network function (VNF2m), and that is located in the currently called virtual network function (VNF2m);
• the second information **(in metaOutputParams)** is a pointer (P17) pointing to a table (**vnfOutputParams**) that contains output parameter values of the currently called virtual network function (VNF2m), and that is located in the currently called virtual network function (VNF2m).

4. A network entity (NE1; NE2) according to the claim 1, wherein the means for receiving use an extension of the protocol OpenFlow or NetConf.

5. **A virtual network function** (VNF1m; VNF2m) comprising means for being called by a network entity, in a software defined network, **characterized in that** said means for being called by a network entity comprise means for receiving from a network entity (NE1; NE2) when said virtual network function is called by said network entity (NE1; NE2), and for storing in said virtual network function (VNF1m; VNF2m):
• first information **(in vnfInputParams**) that enables said virtual network function to acquire input parameters it requires and such that this virtual network function can modify the content of a current data packet according to said input parameters;
• second information (in **vnfOutputParams**) that enables said virtual network function to pass its execution results to said network entity (NE1; NE2);
• third information (in **vnfPacketParams**) that enables said virtual network function to access to a data packet to be processed and to its related characteristics.

6. A virtual network function (VNF1 m) according to claim 5 wherein:
- said first information (in **vnfInputParams**) is a pointer (P6) for pointing to a table (**metaInputParams**) storing input parameters outside the virtual network function (VNF1m), in said network entity (NE1);
- said second information (in **vnfOutputParams**) is a pointer (P7) for pointing to a table **(metaOutputParams)** storing output parameters resulting of the processing of said current data packet, outside the virtual network function (VNF1m), in said network entity (NE2).

7. A virtual network function (VNF2m) according to claim 5 wherein:
- said first information (in **vnflnputParams**) comprises a table for storing input parameters inside said virtual network function (VNF2m);
- said second information (in **vnfOutputParams**) comprises a table for storing output parameters inside said virtual network function (VNF2m).

8. **Software defined network characterized in that** it comprises at least one network entity (NE1; NE2) according to one of the claims 1 to 4 , and at least one virtual network function (VNF1m; VNF2m) according to one of the claims 5 to 7.

9. **Method for interfacing** a network entity (NE1; NE2) and a virtual network function (VNF1m; VNF2m), within a software-defined network comprising at least one software defined network controller, said virtual network function comprising means for being called by a network entity; said method being **characterized in that** it comprises the steps of informing said network entity of the existence of a virtual network function, and how to access to its interface, by transmitting via a control protocol, from said controller to said network entity, an order to add/modify/remove a function entry to/from a function table (FT1; FT2) within the network entity, each function, entry in said function table, having a number (VNF_Number) referring to a different virtual network function (VNF1, ..., VNF1nm), so that said virtual network function can be called by means of said function entry.

10. Method according to claim 9, further comprising the steps of chaining a plurality of virtual network functions (VNFi,..., VNFn) by transmitting from said network controller to said network entity (NE1; NE2) an order to insert/remove a virtual network function (VNFi; VNFn) into/from a packet data path in said network entity.

## Patentansprüche

1. Netzwerkentität (NE1; NE2), umfassend ein Mittel zum Erfassen von Information über eine virtuelle Netzwerkfunktion und ein Mittel zum Anrufen; **dadurch gekennzeichnet, dass** besagtes Mittel zum Anrufen
umfasst:
- eine Funktionstabelle (FT1 ; FT2) zum Speichern mehrerer Funktionseinträge (FE1,..., FEm,..., FEn), wobei jeder Funktionseintrag eine Nummer
(VNF_Number) aufweist, die sich auf unterschiedliche virtuelle Netzwerkfunktionen (VNF1, ..., VNF1m) bezieht, sodass besagte virtuelle Netzwerkfunktion angerufen werden kann mittels besagten Funktionseintrags und wobei jeder Funktionseintrag (FEm) mindestens die folgende Information umfasst:
• einen ersten Pointer (P1 in p_vnfinputParams), der der Netzwerkentität (NE1; NE2) ermöglicht, Eingangsparameter einer momentan angerufenen virtuellen Netzwerkfunktion (VNF1m; VNF2m) zu übermitteln;
• einen zweiten Pointer (P2 in p_vnfOutputParams), der der Netzwerkentität (NE1; NE2) ermöglicht, Ausgangsparameter von einer momentan angerufenen virtuellen Netzwerkfunktion (VNF1m; VNF2m) zu empfangen, wobei besagte Ausgangsparameter sich aus dem Verarbeiten eines momentanen Datenpakets ergeben;
• einen dritten Pointer (P3 in p_vnfPacketsParams), der der Netzwerkentität (NE1; NE2) ermöglicht, den momentanen Datenpaketinhalt und darauf bezogene Information auf die momentan angerufene virtuelle Netzwerkfunktion (VNF1 m; VNF2m) zu übertragen;
- drei interne Metadaten-Platzhalter für das entsprechende Speichern mindestens der folgenden Information:
• erste Information (in metaInputParams), die der Netzwerkentität (NE1; NE2) ermöglicht, auf die momentan angerufene virtuelle Netzwerkfunktion (VNF1m; VNF2m) Eingangsparameterwerte besagter momentanen virtuellen Netzwerkfunktion (VNF1m; VNF2m) zu übermitteln, sodass letztere besagten momentanen Datenpaketinhalt gemäß besagten Eingangsparametern zu modifizieren;
• zweite Information (in metaOutputParams), die der Netzwerkentität (NE1; NE2) ermöglicht, Ausgangsparameter von der momentan angerufenen virtuellen Netzwerkfunktion (VNF1m; VNE2m) zu empfangen;
• dritte Information (in metaPacketParams), die umfasst Eigenschaften des momentanen Datenpakets;
- Mittel zum Empfangen besagter drei Pointer (P1, P2, P3) von einem Software-definierten Netzwerkcontroller.

2. Netzwerkentität (NE1) nach Anspruch 1, wobei:
• die erste Information (in metaInputParams) eine Tabelle umfasst, die Eingangsparameterwerte der momentanen virtuellen Netzwerkfunktion (VNF1 m) umfasst;
• zweite Information (in metaOutputParams), die eine Tabelle umfasst, welche Ausgangsparameterwerte der momentan angerufenen virtuellen Netzwerkfunktion (VNF1m) umfasst.

3. Netzwerkentität (NE2) nach Anspruch 1, wobei:
• die erste Information (in metainputParams) ein Pointer (P16) ist, der auf eine Tabelle (vnfInputParams) zeigt, die Eingangsparameterwerte der momentan angerufenen virtuellen Netzwerkfunktion (VNF2m) zeigt und die lokalisiert ist in der momentan angerufenen virtuellen Netzwerkfunktion (VNF2m);
• die zweite Information (in metaOutputParams) ein Pointer (P17) ist, der auf eine Tabelle (vnfOutputParams) zeigt, welche Ausgangsparameterwerte der momentan angerufenen virtuellen Netzwerkfunktion (VNF2m) zeigt und die lokalisiert ist in der momentan angerufenen virtuellen Netzwerkfunktion (VNF2m).

4. Netzwerkentität (NE1; NE2) nach Anspruch 1, wobei das Mittel zum Empfangen eine Erweiterung des Protokolls OpenFlow oder NetConf verwendet.

5. Virtuelle Netzwerkfunktion (VNF1m; VNF2m), umfassend ein Mittel zum Angerufenwerden durch eine Netzwerkentität in einem Software-definierten Netzwerk, **dadurch gekennzeichnet, dass** besagtes Mittel zum Angerufenwerden durch eine Netzwerkentität ein Mittel umfasst zum Empfangen von einer Netzwerkentität (NE1; NE2), wenn besagte virtuelle Netzwerkfunktion angerufen wird von besagter Netzwerkentität (NE1; NE2), und zum Speichern in besagter virtuellen Netzwerkfunktion (VNF1m; VNF2m) von:
• erster Information (in vnfInputParams), die besagter virtuellen Netzwerkfunktion ermöglicht, Eingangsparameter zu erfassen, die es benötigt, sodass diese virtuelle Netzwerkfunktion den Inhalt eines momentanen Datenpakets gemäß besagten Eingangsparametern zu modifizieren;
• zweiter Information (in vnfOutputParams), die besagter virtuellen Netzwerkfunktion ermöglicht, ihre Ausführungsergebnisse auf besagte Netzwerkentität (NE1; NE2) zu übertragen;
• dritter Information (in vnfPacketParams), die besagter virtuellen Netzwerkfunktion ermöglicht, auf ein zu verarbeitendes Datenpaket zuzugreifen und auf seine darauf bezogenen Eigenschaften.

6. Virtuelle Netzwerkfunktion (VNF1 m) nach Anspruch 5, wobei:
- besagte erste Information (in vnfInputParams) ein Pointer (P6) ist zum Zeigen auf eine Tabelle (metaInputParams), welche Eingangsparameter außerhalb der virtuellen Netzwerkfunktion (VNF1 m) in besagter Netzwerkentität (NE1) zeigt;
- besagte zweite Information (in vnfOutputParams) ein Pointer (P7) ist zum Zeigen auf eine Tabelle (metaOutputParams), welche Ausgangsparameter speichert, die sich ergeben aus dem Verarbeiten besagten momentane Datenpakets außerhalb der virtuellen Netzwerkfunktion (VNF1 m) in besagter Netzwerkentität (NE2).

7. Virtuelle Netzwerkfunktion (VNF2m) nach Anspruch 5, wobei:
- besagte erste Information (in vnfInputParams) eine Tabelle umfasst zum Speichern von Eingangsparametern innerhalb besagter virtuellen Netzwerkfunktion (VNF2m);
- besagte zweite Information (in vnfOutputParams) eine Tabelle umfasst zum Speichern von Ausgangsparametern innerhalb besagter virtuellen Netzwerkfunktion (VNF2m).

8. Software-definiertes Netzwerk, **dadurch gekennzeichnet, dass** es mindestens eine Netzwerkentität (NE1; NE2) nach einem der Ansprüche 1 bis 4 umfasst und mindestens eine virtuelle Netzwerkfunktion (VNF1 m; VNF2m) nach einem der Ansprüche 5 bis 7.

9. Verfahren für eine Schnittstelle für eine Netzwerkentität (NE1; NE2) und eine virtuelle Netzwerkfunktion (VNF1m; VNF2m) innerhalb eines Software-definierten Netzwerks, umfassend mindestens einen Software-definierten Netzwerkcontroller, wobei besagte virtuelle Netzwerkfunktion ein Mittel umfasst zum Angerufenwerden durch eine Netzwerkentität; wobei besagtes Verfahren **dadurch gekennzeichnet ist, dass** es die Schritte zum Informieren besagter Netzwerkentität über das Vorhandensein einer virtuellen Netzwerkfunktion umfasst und darüber, wie auf die Schnittstelle zugegriffen wird, durch Übertragen über ein Kontrollprotokoll, von besagtem Controller zu besagter Netzwerkentität, um einen Funktionseintrag auf/von einer Funktionstabelle (FT1; FT2) hinzuzufügen/zu modifizieren/zu entfernen innerhalb der Netzwerkentität, wobei jeder Funktionseintrag in besagter Funktionstabelle eine Nummer (VNF_Number) aufweist, die sich auf unterschiedliche virtuelle Netzwerkfunktionen (VNF1, ..., VNF1nm) bezieht, sodass besagte virtuelle Netzwerkfunktion angerufen werden kann mittels besagten Funktionseintrags.

10. Verfahren nach Anspruch 9, weiterhin umfassend die Schritte einer Verkettung einer Vielzahl virtueller Netzwerkfunktionen (VNFi,..., VNFn) durch Übertragen von besagtem Netzwerkcontroller auf besagte Netzwerkentität (NE1; NE2), um eine virtuelle Netzwerkfunktion (VNFi; VNFn) in/von einem Datenpaketpfad in besagte Netzwerkentität einzufügen/zu entfernen.

## Revendications

1. Entité de réseau (NE1 ; NE2) comprenant un moyen destiné à acquérir des informations concernant une fonction de réseau virtuel et un moyen destiné à l'appeler ; **caractérisé en ce que** ledit moyen destiné à l'appeler comprend :
- une table de fonctions (FT1 ; FT2) destinée à stocker plusieurs entrées de fonction (FE1,..., FEm,..., FEn), chaque entrée de fonction ayant un nombre (VNF_Number) se rapportant à une fonction de réseau virtuel (VNF1, ..., VNF1m) différente, de sorte que ladite fonction de réseau virtuel peut être appelée au moyen de ladite entrée de fonction, et chaque entrée de fonction (FEm) contenant au moins les informations suivantes :
• un premier pointeur (P1 dans p_vnfInputParams) qui permet à l'entité de réseau (NE1 ; NE2) de passer des paramètres de saisie à une fonction de réseau virtuel actuellement appelée (VNF1m ; VNF2m) ;
• un deuxième pointeur (P2 dans p_vnfOutputParams) qui permet à l'entité de réseau (NE1 ; NE2) de récupérer des paramètres de sortie à partir d'une fonction de réseau virtuel actuellement appelée (VNF1m ; VNF2m), lesdits paramètres de sortie résultant du traitement d'un paquet de données actuel ;
• un troisième pointeur (P3 dans p_vnfPacketParams) qui permet à l'entité de réseau (NE1 ; NE2) de passer le contenu et des informations liées du paquet de données actuel à la fonction de réseau virtuel actuellement appelée (VNF1 m ; VNF2m) ;
- trois paramètres substituables de métadonnées internes destinés à stocker respectivement au moins les informations suivantes :
• une première information (dans metaInputParams) qui permet à l'entité de réseau (NE1 ; NE2) de passer, à la fonction de réseau virtuel actuellement appelée (VNF1m ; VNF2m), des valeurs de paramètre de saisie de ladite fonction de réseau virtuel actuelle (VNF1m ; VNF2m), de sorte que cette dernière puisse modifier ledit contenu de paquet de données actuel selon lesdits paramètres de saisie ;
• une deuxième information (dans metaOutputParams) qui permet à l'entité de réseau (NE1 ; NE2) de récupérer des paramètres de sortie à partir de la fonction de réseau virtuel actuellement appelée (VNF1m ; VNF2m) ;
• une troisième information (dans metaPacketParams) qui comprend des caractéristiques du paquet de données actuel ;
- un moyen destiné à recevoir lesdits trois pointeurs (P1, P2, P3) à partir d'un contrôleur de réseau défini par logiciel.

2. Entité de réseau (NE1) selon la revendication 1, dans laquelle :
• la première information (dans metaInputParams) comprend une table qui contient des valeurs de paramètre de saisie de la fonction de réseau virtuel actuelle (VNF1m) ;
• une deuxième information (dans metaOutputParams) comprend une table qui contient des valeurs de paramètre de sortie de la fonction de réseau virtuel actuellement appelée (VNF1m).

3. Entité de réseau (NE2) selon la revendication 1, dans laquelle :
• la première information (dans metaInputParams) est un pointeur (P16) pointant vers une table (vnfInputParams) qui contient des valeurs de paramètre de saisie de la fonction de réseau virtuel actuellement appelée (VNF2m), et qui est localisée dans la fonction de réseau virtuel actuellement appelée (VNF2m) ;
• la deuxième information (dans metaOutputParams) est un pointeur (P17) pointant vers une table (vnfOutputParams) qui contient des valeurs de paramètre de sortie de la fonction de réseau virtuel actuellement appelée (VNF2m), et qui est localisée dans la fonction de réseau virtuel actuellement appelée (VNF2m).

4. Entité de réseau (NE1 ; NE2) selon la revendication 1, dans laquelle le moyen destiné à une réception utilise une extension du protocole OpenFlow ou NetConf.

5. Fonction de réseau virtuel (VNF1 m ; VNF2m) comprenant un moyen d'appel par une entité de réseau, dans un réseau défini par logiciel, **caractérisée en ce que** ledit moyen d'appel par une entité de réseau comprend un moyen de réception à partir d'une entité de réseau (NE1 ; NE2) lorsque ladite fonction de réseau virtuel est appelée par ladite entité de réseau (NE1 ; NE2), et de stockage dans ladite fonction de réseau virtuel (VNF1 m ; VNF2m) :
• une première information (dans vnfInputParams) qui permet à ladite fonction de réseau virtuel d'acquérir des paramètres de saisie qu'elle requiert et de sorte que cette fonction de réseau virtuel puisse modifier le contenu d'un paquet de données actuel selon lesdits paramètres de saisie ;
• une deuxième information (dans vnfOutputParams) qui permet à ladite fonction de réseau virtuel de passer ses résultats d'exécution à ladite entité de réseau (NE1 ; NE2) ;
• une troisième information (dans vnfPacketParams) qui permet à ladite fonction de réseau virtuel d'accéder à un paquet de données destinées à être traitées et à ses caractéristiques liées.

6. Fonction de réseau virtuel (VNF1 m) selon la revendication 5 dans laquelle :
- ladite première information (dans vnfInputParams) est un pointeur (P6) destiné à pointer vers une table (metaInputParams) stockant des paramètres de saisie en dehors de la fonction de réseau virtuel (VNF1 m), dans ladite entité de réseau (NE1) ;
- ladite deuxième information (dans vnfOutputParams) est un pointeur (P7) destiné à pointer vers une table (metaOutputParams) stockant des paramètres de sortie résultant du traitement dudit paquet de données actuel, en dehors de la fonction de réseau virtuel (VNF1 m), dans ladite entité de réseau (NE2).

7. Fonction de réseau virtuel (VNF2m) selon la revendication 5 dans laquelle :
- ladite première information (dans vnfInputParams) comprend une table destinée à stocker des paramètres de saisie à l'intérieur de ladite fonction de réseau virtuel (VNF2m) ;
- ladite deuxième information (dans vnfOutputParams) comprend une table destinée à stocker des paramètres de sortie à l'intérieur de ladite fonction de réseau virtuel (VNF2m).

8. Réseau défini par logiciel **caractérisé en ce qu'**il comprend au moins une entité de réseau (NE1 ; NE2) selon une des revendications 1 à 4, et au moins une fonction de réseau virtuel (VNF1 m ; VNF2m) selon une des revendications 5 à 7.

9. Procédé destiné à interfacer une entité de réseau (NE1 ; NE2) et une fonction de réseau virtuel (VNF1m ; VNF2m), à l'intérieur d'un réseau défini par logiciel comprenant au moins un contrôleur de réseau défini par logiciel, ladite fonction de réseau virtuel comprenant un moyen d'appel par une entité de réseau ; ledit procédé étant **caractérisé en ce qu'**il comprend les étapes d'information de ladite entité de réseau de l'existence d'une fonction de réseau virtuel, et de comment accéder à son interface, en transmettant via un protocole de commande, à partir dudit contrôleur vers ladite entité de réseau, un ordre d'ajout/modification/retrait d'une entrée de fonction à/d'une table de fonction (FT1 ; FT2) à l'intérieur de l'entité de réseau, chaque fonction, entrée dans ladite table de fonction, présentant un nombre (VNF_Number) se rapportant à une fonction de réseau virtuel différente (VNF1, ..., VNF1nm), afin que ladite fonction de réseau virtuel puisse être appelée au moyen de ladite entrée de fonction.

10. Procédé selon la revendication 9, comprenant en outre les étapes d'enchaînement d'une pluralité de fonctions de réseau virtuel (VNFi,..., VNFn) en transmettant à partir dudit contrôleur de réseau vers ladite entité de réseau (NE1 ; NE2) un ordre d'insertion/retrait d'une fonction de réseau virtuel (VNFi ; VNFn) dans/d'un chemin de données de paquet dans ladite entité de réseau.
